Europäisches Patentamt

European Patent Office

Office européen des brevets

(19)

(11) Veröffentlichungsnummer: **0 261 374**
**A1**

(12) ## EUROPÄISCHE PATENTANMELDUNG

(21) Anmeldenummer: **87111660.4**

(22) Anmeldetag: **12.08.87**

(51) Int. Cl.³: **B 24 B 23/02**
**F 16 J 15/34, F 16 C 33/76**

(30) Priorität: **18.09.86 DE 8624918 U**

(43) Veröffentlichungstag der Anmeldung:
**30.03.88 Patentblatt 88/13**

(84) Benannte Vertragsstaaten:
**CH DE FR GB IT LI**

(71) Anmelder: **ROBERT BOSCH GMBH**
**Postfach 50**
**D-7000 Stuttgart 1(DE)**

(72) Erfinder: **Borst, Erich**
**Pappelweg 9**
**D-7022 Leinfelden-Echterdingen(DE)**

(54) **Filz-Gleitringdichtung für Handwerkzeugmaschinen.**

(57) Bekannte Filz-Gleitringdichtungen weisen eine unbefriedigende Lebensdauer auf und lassen sich nicht automatisiert montieren. Eine neue Ausführung soll diese Nachteile beseitigen.

Durch die Halterung des Filz-Dichtringes (18) in einer ringförmigen Fassung (17) und die Anordnung des Dichtspaltes (19) zwischen einer Stirnfläche im Bereich einer Öffnung des Getriebegehäuses (8) und einer von der Fassung (17) freigelassenen Stirnfläche des federnd angedrückten Filz-Dichtringes (18) werden die vorstehend beschriebenen Nachteile beseitigt.

Die Anordnung eignet sich z.B. für Wellen, an denen eine Abdichtung gegen den Austritt von dünnflüssigem Fett vorgenommen werden soll.

EP 0 261 374 A1

./...

Fig. 1

Fig. 1.2

R. 20849
9.9.1986 Br/Le

ROBERT BOSCH GMBH, 7000 STUTTGART 1

Filz-Gleitringdichtung für Handwerkzeugmaschinen

Die Neuerung geht aus von einer Filz-Gleitringdichtung nach der
Gattung des Hauptanspruchs. Solche Dichtungen sind z.B. an
Bosch-Winkelschleifern bekannt. Der Dichtspalt besteht dort zwischen
dem feststehenden Filz-Dichtring und der zylindrischen Außenfläche
der rotierenden Nabe eines Ritzels oder Tellerrades. Diese Nabe ist
im Dichtbereich gehärtet, geschliffen und kugelgestrahlt. Außerdem
ist sie mit einem Rückfördergewinde versehen, durch das in den
Dichtspalt gelangtes Schmiermittel in den Getrieberaum zurückgefördert wird.

Eine so aufgebaute Filz-Gleitringdichtung erfordert einen hohen
Material- und Fertigungsaufwand. Eine automatisierte Montage ist
nicht möglich, weil sie die Gefahr birgt, daß dabei der Filz-Dichtring beschädigt wird. Auch die Lebensdauer des Filz-Dichtringes ist
unbefriedigend. Im Neuzustand gleitet der Filz-Dichtring unter
Pressung auf der Zylinderfläche mit dem Rückfördergewinde. Das
scharfkantige Gewindeprofil des Rückfördergewindes reibt bei Drehzahlen bis 28 000 $n^{-1}$ in der Filz-Dichtringbohrung und scheuert
den Filz ab. Dabei wird die Filz-Dichtringbohrung größer und es bildet sich ein Spalt, durch den das als Schmiermittel verwendete dünnflüssige Fett austritt. Einen federnden Nachstelleffekt, der den
Verschleiß ausgleichen könnte, gibt es nicht.

...

Neuerungsgemäß werden diese Nachteile durch eine Filz-Gleitringdichtung mit den kennzeichnenden Merkmalen des Hauptanspruchs vermieden. Durch das Bilden des Dichtspaltes mit einem Filz-Dichtring und einer Stirnfläche im Bereich einer Öffnung im Getriebegehäuse der Handwerkzeugmaschine ist eine einfache Montage möglich. Die Dichtung ergibt sich automatisch beim Zusammenstecken der Getriebeteile. Dabei gleicht das federnde Andrücken des Filz-Dichtringes eine eventuelle Abnutzung aus. Durch die in den Unteransprüchen aufgeführten Maßnahmen sind vorteilhafte Weiterbildungen und Verbesserungen der im Hauptanspruch angegebenen Filz-Gleitringdichtung möglich. Besonders vorteilhaft sind die gleitfördernde Behandlung der den Dichtspalt mitbildenden Stirnfläche und die Maßnahmen zur Verbesserung der Federeigenschaften in der Fassung des Filz-Dicht-ringes.

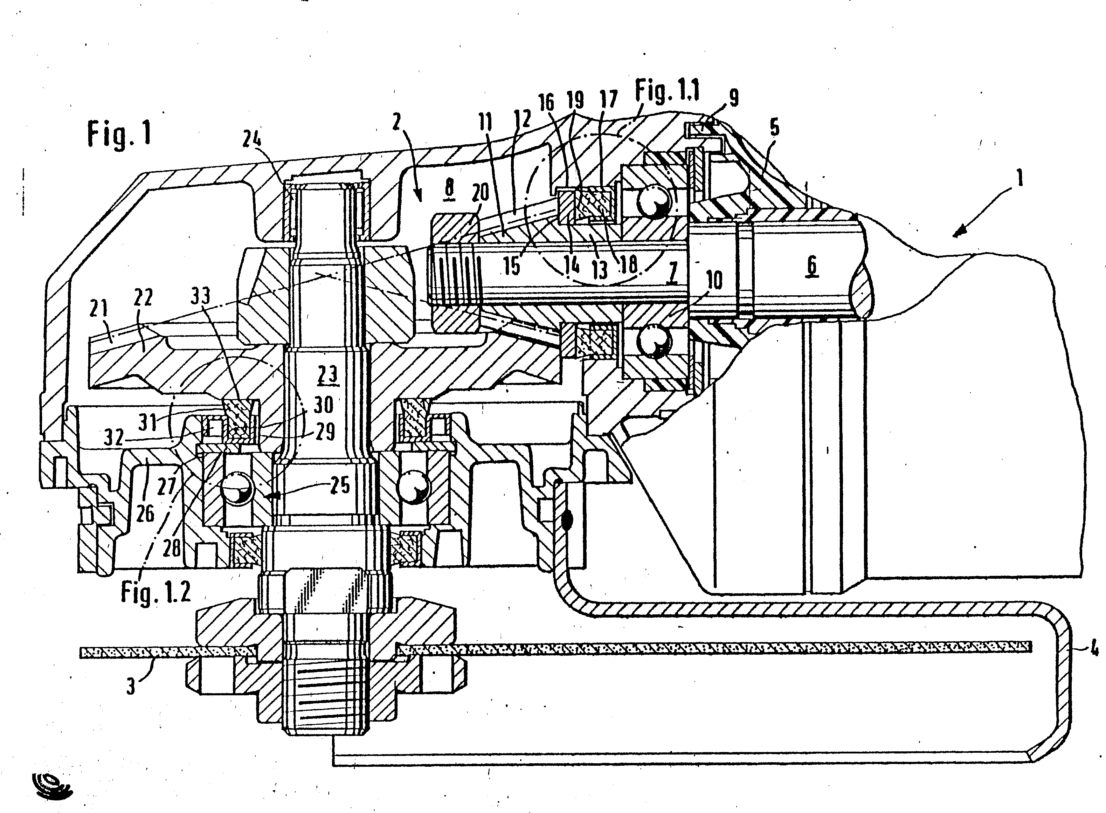

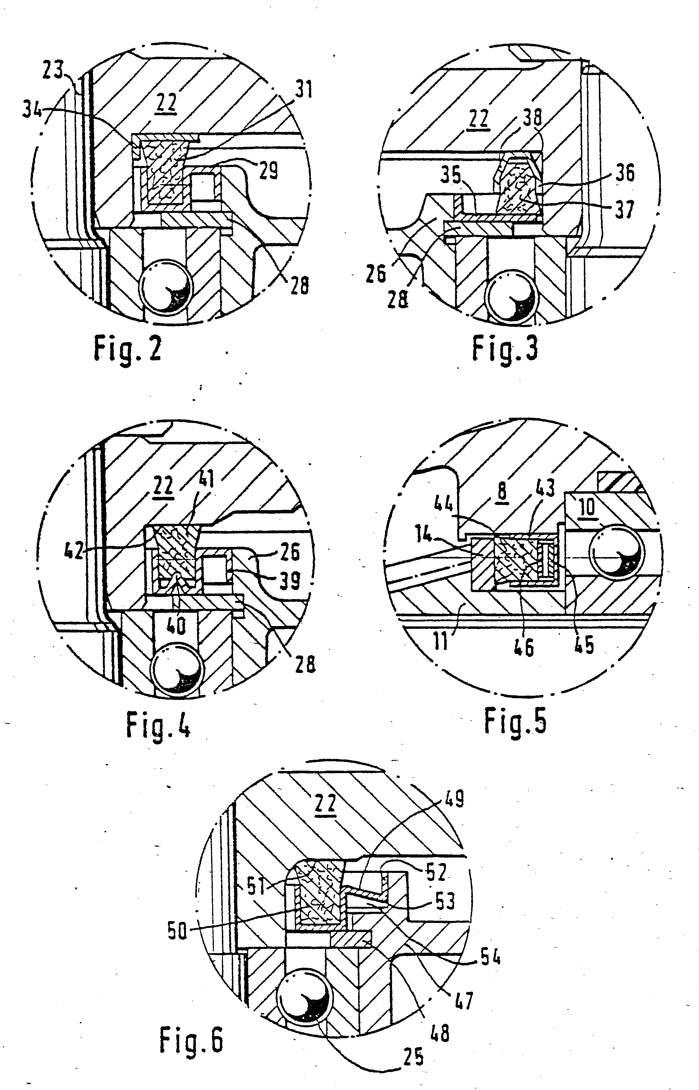

Im nachfolgenden soll die neuerungsgemäße Filz-Gleitringdichtung anhand mehrerer Ausführungsbeispiele näher erläutert werden. Es zeigen Figur 1 einen Querschnitt durch ein Winkelgetriebe eines Winkel-schleifers mit zwei verschiedenen Ausführungsformen der neuerungsgemäßen Filz-Gleitringdichtung, Figur 2 einen Teilschnitt zu einer dritten Ausführungsform, Figuren 3 bis 6 Teilschnitte wie Figur 2 zu weiteren vier Ausführungsformen der Neuerung.

In Figur 1 ist ein Winkelschleifer 1 mit einem Winkelgetriebe 2, einer Trennscheibe 3 und einer Schutzhaube 4 gezeigt. Aus einem Motorgehäuse 5 ragt eine Motorwelle 6 mit einem Zapfen 7 in ein Getriebegehäuse 8. Das Motorgehäuse 5 und das Getriebegehäuse 8 sind über ein Labyrinth 9 zusammengefügt. Die Motorwelle 6 lagert in einem Kugellager 10, das seinerseits in einer Ausnehmung im Getriebegehäuse 8 lagert. Der Zapfen 7 der Motorwelle 6, auf dem der Innenring des Kugellagers 10 sitzt, trägt ein Kegelritzel 11 mit

...

Zähnen 12. Auf einen rückwärtigen Bund 13 des Kegelritzels 11 ist eine Gleitscheibe 14 aufgepreßt, bis zum Anliegen an die Stirnfläche 15 am Ende des Bundes 13 und der Zähne 12. Eine die Gleitscheibe 14 außen übergreifende, zylindrische Ausnehmung 16 nimmt eine Fassung 17 mit Preßsitz auf, die einen Filz-Dichtring 18 hält. Ein Teil dieses Filz-Dichtringes 18 überragt die Fassung 17 und liegt mit seiner Stirnfläche an einer entsprechenden Stirnfläche der Gleitscheibe 14 an, mit dieser einen Dichtspalt 19 bildend. So ist das mit Schmiermittel gefüllte Getriebegehäuse 8 (siehe Figur 1.1) gegen das Kugellager 10 und die Motorwelle 6 abgedichtet. Eine Mutter 20 am Ende des Schachtes 7 spannt das Kegelritzel 11 gegen den Innenring des Kugellagers 10 fest. Die Zähne 12 des Kegelritzels 11 greifen ein in Zähne 21 eines Tellerades 22. Dieses Tellerrad 22 sitzt fest auf einer Arbeitsspindel 23, die einerseits in einem Nadellager 24 und andererseits in einem Kugellager 25 gelagert ist. Während das Nadellager 24 in einer Bohrung des Getriebegehäuses 8 gelagert ist, lagert das Kugellager 25 in einer Ausnehmung eines Getriebegehäusedeckels 26. In eine Nut 27 in der Ausnehmung des Getriebegehäusedeckels 26 ist ein Sicherungsring 28 eingespannt, der das Kugellager 25 axial sichert. Zugleich dient er als Anlage für eine Fassung 29 (Figur 1.2) mit labyrinthförmigem Querschnitt. Diese Fassung 29 hat eine innere Ringnut 30, die zum Tellerrad 22 hin offen ist. Sie kann einen Filz-Dichtring 31 aufnehmen. Sie bildet aber auch eine zum Sicherungsring 28 hin offene, äußere Ringnut 32. Der Außenrand dieser äußeren Ringnut 32 ist eingepreßt in die Ausnehmung des Getriebegehäusedeckels 26, bis die Fassung 29 am Sicherungsring 28 anliegt. Beim Ansetzen des Getriebegehäusedeckels 28 an das Getriebegehäuse 8 trifft die freie Stirnfläche des Filz-Dichtringes 31 auf eine Stirnfläche des Tellerrades 22, mit dieser einen Dichtspalt 33 bildend. Damit ist das mit Schmiermittel gefüllte Getriebegehäuse 8 auch hier nach außen hin abgedichtet, mit einer neuerungsgemäß ver-

...

besserten Filz-Gleitringdichtung. Die Arbeitsspindel 23 trägt, in
bekannter Weise mit Spannflanschen gesichert, die Trennscheibe 3.

Die in Figur 2 gezeigte Ausführung einer neuerungsgemäßen
Filz-Gleitringdichtung umfaßt neben dem Sicherungsring 28 gemäß
Figur 1.2 und der dort verwendeten Fassung 29 mit dem Filz-Dichtring
31 eine Gleitscheibe 34. Diese Gleitscheibe 34 ist aufgepreßt auf
die Nabe des Tellerrades 22. Sie ist ein Blechteil. Ihre gewalzte
Oberfläche hat ohne Nachbehandlung gute Gleiteigenschaften.

Figur 3 zeigt eine Einzelheit des Winkelschleifers nach Figur 1 mit
einer weiteren Ausführungsform der neuerungsgemäßen Filz-Gleitringdichtung. Der Sicherungsring 28 stützt hier eine in die Kugellagerbohrung eingepreßte Gleitscheibe 35 aus Blech. Diese Gleitscheibe 35
steht also im Gegensatz zur Gleitscheibe 34 still. Eine Fassung 36
ist auf die Nabe des Tellerrades 22 aufgepreßt und zur Gleitscheibe
35 hin offen. Die von ihr gebildete Nut zur Aufnahme eines
Filz-Dichtringes 37 ist durch schräge Wandteile 38 zum Nutgrund hin
verengt. Auf diese Weise werden die Federungseigenschaften des
Filz-Dichtringes 37 sowohl in axialer als auch in radialer Richtung
genutzt. Die Federcharakteristik bezogen auf die Anlage des
Filz-Dichtringes 37 an der Gleitscheibe 34 wird dadurch flacher.
Beim Belasten des Filz-Dichtringes 37 in axialer Richtung, federt
dieser in gleicher Richtung in sich. Er wird zugleich aber auch
zwischen die schrägen Wandteile 38 gedrängt und gleitet, radial einfedernd, an diesen Wandteilen 38 zum Nutgrund hin.

Der gleiche Federungseffekt wird durch eine Fassung 39 erzielt, die
im Ausführungsbeispiel nach Figur 4 gezeigt ist. Dort ist wieder der
labyrinthförmige Querschnitt ähnlich der Fassung 29 verwendet. In
den Nutgrund dieser Fassung 39 ragt aber eine ringförmige Rippe 40.
Durch sie wird die lichte Weite der einen Filz-Dichtring 41 auf-

...

nehmenden Nut der Fassung 39 ebenfalls verringert. Im Beispielsfalle ist auf eine besondere Gleitscheibe verzichtet worden. Der Filz-Dichtring 41 liegt direkt an einer entsprechend bearbeiteten Stirnfläche 42 des Tellerrades 22 an.

Figur 5 zeigt ein Ausführungsbeispiel bei dem die Verbesserung der Federungscharakteristik der Filz-Gleitringdichtung auf andere Weise erzielt ist. In das Getriebegehäuse 8 ist neben dem Kugellager 10 eine Fassung 43 für einen Filz-Dichtring 44 eingepreßt. Diese Fassung 43 ist zur Gleitscheibe 14 hin offen. In die den Filz-Dichtring 44 aufnehmende Nut sind zuerst eine gewellte Feder 45 und eine plane Deckscheibe 46 eingelegt. Der Filz-Dichtring 44 stützt sich auf der planen Deckscheibe 46 ab.

Figur 6 gibt schließlich eine Ausführungsform an, bei der das Einpressen der Fassung in ihren Sitz verbessert ist. Hier ist das Kugellager 25 in eine Ausnehmung eines Getriebegehäusedeckels 47 eingesetzt und dort mittels eines Sicherungsringes 48 gesichert. Zugleich stützt der Sicherungsring 48 eine Fassung 49 ab, die einen Filz-Dichtring 50 aufnimmt und gegen eine Stirnfläche 51 des Tellerrades 22 hält. Der äußere Ring 52 dieser Fassung 49 ist ebenfalls zum Tellerrad 22 hin offen. Das heißt, daß die durch das Tiefziehen der Fassung abgerundete Kante 53 einer weiteren Ausnehmung 54 zugewendet ist, in die dieser äußere Ring 52 eingepreßt werden kann. So wird vermieden, daß eine scharfe Kante der Fassung 49 beim Ein-pressen in die Ausnehmung 54 schabt. Das könnte sonst den festen Sitz der Fassung 49 gefährden.

0261374

R. 20849
9.9.1986 Br/Le

ROBERT BOSCH GMBH, 7000 STUTTGART 1

Ansprüche

1. Filz-Gleitringdichtung für Handwerkzeugmaschinen, insbesondere für Winkelschleifer mit einem mit Schmiermittel gefüllten Getriebegehäuse und aus diesem Getriebegehäuse heraustretenden Abtriebselementen, Spindel, Ritzel oder dergleichen, mit einem Dichtspalt zwischen einem Dichtring und einer diesem zugewandten Gleitfläche, dadurch gekennzeichnet, daß ein Filz-Dichtring (18) in einer ringförmigen Fassung (17) gehalten ist, die eine Stirnfläche dieses Filz-Dichtringes (18) freiläßt, zum federnden Andrücken an einer Stirnfläche im Bereich einer Öffnung im Getriebegehäuse (8) mit der zusammen er einen Dichtspalt (19) bildet.

2. Filz-Gleitringdichtung nach Anspruch 1, dadurch gekennzeichnet, daß die den Dichtspalt (19) mitbildende Stirnfläche gleitfördernd behandelt ist.

3. Filz-Gleitringdichtung nach Anspruch 2, dadurch gekennzeichnet, daß die den Dichtspalt (19) mitbildende Stirnfläche an einem Abtriebselement ist, das Abtriebselement ein Getrieberad (22) auf einer Abtriebswelle (23) ist und auf die Nabe dieses Getrieberades (22) eine Gleitscheibe (34) aufgepreßt ist, deren gewalzte Stirnfläche als Gleitfläche dient.

...

Fig. 1

Fig. 1.1

Fig. 1.2

1/2

0261374

ZU84Y

ZU 849
0261374

Fig.2

Fig.3

Fig.4

Fig.5

Fig.6

0261374

**Europäisches Patentamt**

# EUROPÄISCHER RECHERCHENBERICHT

Nummer der Anmeldung

EP 87 11 1660

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| Y | DE-A-3 018 774 (LICENTIA)<br>* gesamtes Dokument *<br>--- | 1 | B 24 B 23/02<br>F 16 J 15/34<br>F 16 C 33/76 |
| Y | DE-U-7 931 401 (FEIN)<br>* Ansprüche 1, 2; Figuren 1, 2 *<br>--- | 1 | |
| Y | US-A-4 241 957 (PECK)<br>* Spalte 3, Zeilen 1-7; Figur 2 *<br>--- | 1 | |
| A | BE-A- 640 728 (AUTO-UNION)<br>* Anspruch 1; Figur 2 *<br>--- | 1,6 | |
| A | US-A-4 407 513 (TAKENAKA et al.)<br>* Anspruch 1; Figuren 1, 5-7 *<br>----- | 2 | |

| RECHERCHIERTE SACHGEBIETE (Int. Cl.4) |
|---|
| B 24 B 23/02<br>F 16 J 15/00<br>F 16 C 33/76 |

Der vorliegende Recherchenbericht wurde für alle Patentansprüche erstellt

| Recherchenort | Abschlußdatum der Recherche | Prüfer |
|---|---|---|
| BERLIN | 02-12-1987 | BERNAS Y.N.E. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument
........................................
& : Mitglied der gleichen Patentfamilie, übereinstimmendes Dokument

EPO FORM 1503 03.82 (P0403)